# EUROPÄISCHE PATENTANMELDUNG

(11) **EP 4 610 023 A1**
(43) Veröffentlichungstag der Anmeldung: **03.09.2025**
(21) Anmeldenummer: 25157369.7
(22) Anmeldetag: 12.02.2025
(51) Int. Cl.: B29C 49/80, B29C 49/06, B29C 49/42, B29C 49/78, B29K 67/00, B29L 31/00, G01M 3/28

(54) **VERFAHREN ZUM ERFASSEN EINER LECKAGE EINES VENTILS EINER BLASMASCHINE SOWIE STEUERUNG UND SYSTEM ZUM AUSFÜHREN DES VERFAHRENS**

(30) Priorität: 29.02.2024 DE 102024105733
(71) Anmelder: KHS GmbH, 44143 Dortmund (DE)
(72) Erfinder: Ulutürk, Deniz, 44143 Dortmund (DE); Gerkens, André, 44143 Dortmund (DE); Meyer, Tobias, 44143 Dortmund (DE); Schmidt, Joachim, 8442 HETTLINGEN (CH); Hug, Thomas, 8623 WETZIKON (CH); Fehlmann, Mathias, 8330 PFÄFFIKON (CH)
(74) Vertreter: Eisenführ Speiser

(57) **Zusammenfassung**

Die Erfindung betrifft ein Verfahren zum Erfassen einer Leckage eines Ventils einer Blasmaschine (12), wobei die Blasmaschine (12) zum Aufweiten eines Hohlkörpers gegen eine äußere Form mindestens eine Blasstation (14) mit einem mehrere Ventile aufweisenden Steuerblock (16), eine Steuerung zum Steuern der Ventile und eine Blasdüse (26) aufweist, die gegen den in der äußeren Form gehaltenen Hohlkörper dichtend zur Anlage bringbar ist, wobei die Blasdüse (26) eine Blasdüsenöffnung (28) zum Einleiten von Druckgas in den Hohlkörper aufweist und eine Zuführung des Druckgases durch die Ventile steuerbar ist. Der Steuerblock (16) umfasst ein erstes Blasventil (18), ein zweites Blasventil (20) sowie ein Entlüftungsventil (22). Das Verfahren umfasst ein Bereitstellen von Druckgas mit einem ersten Druckniveau (42) am ersten Druckanschluss (38), ein Bereitstellen von Druckgas mit einem zweiten Druckniveau (48) am zweiten Druckanschluss (44), ein abgedichtetes Verbinden eines Testkörpers (32), der ein konstant bleibendes Testvolumen (30) bereitstellt oder mit dem ein konstant bleibendes Testvolumen (30) bereitgestellt wird, ein Einstellen der Zustände der Ventile des Steuerblocks (16) in einem Einstellschritt eines Testablaufplans mit der Steuerung, ein Messen mindestens eines Druckwerts oder eines Druckverlaufs in einem beaufschlagbaren Wegbereich, der durch den Testkörper (32) begrenzbar ist, vorzugsweise im Testvolumen (30) oder im Bereich der Blasdüsenöffnung (28), in einem Messschritt des Testablaufplans, der auf den Einstellschritt folgt sowie ein Erfassen und Auswerten des mindestens einen Druckwerts und/oder des Druckverlaufs während mindestens eines Messzeitraums des Messschritts, wobei im Messschritt die Zustände der Ventile unverändert bleiben.

Die Erfindung betrifft ferner eine Steuerung für eine Blasmaschine (12) und ein System mit einer Steuerung.

## Beschreibung

Die Erfindung betrifft eine Blasmaschine zum Umformen von Hohlkörpern. Hohlkörper entsprechen vor einem Umformprozess vorzugsweise Vorformlingen, die durch ein Urformverfahren, wie etwa ein Spritzgießverfahren, aus einem thermoplastischen Kunststoff hergestellt werden. Derartige Vorformlinge dienen demnach als Rohlinge für die Herstellung von Behältern, wie Kunststoffflaschen, etwa zur Bereitstellung von Getränken, durch den Umformprozess.

Vorformlinge werden üblicherweise zunächst temperaturkonditioniert, das heißt auf eine für eine Umformung geeignete Temperatur gebracht, und im Anschluss im Umformprozess mithilfe einer Blasmaschine, zum Beispiel in einem Blasformverfahren, bei dem der zuvor temperierte Vorformling gegen eine äußere Form aufgeweitet wird, umgeformt. Der in der äußeren Form aufgenommene Vorformling wird zum Beispiel mit einer Reckstange in Axialrichtung gestreckt und ein Druckfluid, zum Beispiel ein Gas, wie Luft, in den Vorformling eingeleitet, um den Vorformling unter Druckbeaufschlagung auszudehnen, bis er eine innere Kontur der äußeren Form annimmt. Solche expandierten und gestreckten Vorformlinge können dann auch als Behälter bezeichnet werden. Solche Behälter werden daraufhin beispielsweise in einem Abfüllprozess mit einer Flüssigkeit, wie einem Getränk, befüllt.

Als zentrale Bearbeitungsstation zum Umformen des Vorformlings dient demnach eine Blasmaschine, die mehrere Blasstationen aufweist. Hierbei verläuft der Blasprozess in einer Blasstation üblicherweise in drei Stufen. Demnach wird in einer ersten Stufe bei einer Vorbereitung des Blasprozesses zunächst ein beheizter Vorformling in eine geöffnete Blasform gegeben. Die Blasform schließt und eine Reckstange bewegt sich abwärts. Eine Blasdüse schließt luftdicht, also dichtend, an der Mündung des Vorformlings an und die Reckstange erreicht eine Kuppe des Vorformlings.

Daraufhin folgt in einer zweiten Stufe der eigentliche Prozesszyklus, der häufig in fünf Phasen abläuft. In diesen fünf Phasen werden Ventile in einem Steuerblock der Blasstation unterschiedlich geöffnet und geschlossen, so dass mithilfe eines Druckgases, das ein erstes Druckniveau aufweist, der Vorformling in einer ersten Phase zu einer sogenannten Flaschenblase vorgeblasen wird. In einer zweiten Phase wird die aus der ersten Phase entstandene Flaschenblase weiter aufgeblasen. Hierzu wird Druckgas mit einem weiteren höheren Druckniveau verwendet, das durch Umschalten von Ventilen bereitstellbar ist. In der dritten Phase werden wiederum die Ventile geschaltet, um ein Druckgas mit vergleichsweise höherem Druck als in den ersten und zweiten Phasen bereitzustellen. Die Flaschenblase wird somit bis auf die feinsten Konturen ausgeformt. In einer vierten Phase werden die Ventilzustände erneut geändert, um eine Rückgewinnung der Druckluft aus der fertig geformten Flasche für einen weiteren Blasprozess, insbesondere für eine zweite Phase eines weiteren Blasprozesses, zu erhalten. In der fünften Phase wird das Restgas aus dem fertig geformten Behälter, also beispielsweise der Flasche, abgelassen, indem wiederum die Ventilstellungen verändert werden.

In einer dritten Stufe werden die Reckstange und die Blasdüse angehoben und die Form öffnet sich, um den fertigen Behälter oder die Flasche entnehmen zu können.

Aufgrund der hohen Anzahl der mit einer Blasstation umgeformten Hohlkörper und der schnellen und häufigen Umschaltung der einzelnen Ventile in der Blasstation, sind diese Ventile nicht verschleißfrei ausbildbar. Aufgrund des Verschleißes oder aber auch eines Defekts verlieren Ventile des Steuerblocks an Dichtheit, beispielsweise gegenüber einer Umgebung. Eine Reduktion der Dichtheit der Ventile führt üblicherweise bis zu einem gewissen Grad nicht zu einer Beeinträchtigung der Qualität des Umformprozesses, erhöht aber den Bedarf von bereitzustellendem Druckgas für den Herstellungsprozess. Da Druckgas, beispielsweise Druckluft, üblicherweise mit einem Kompressor bereitgestellt wird, bedeutet eine Reduktion der Dichtheit damit einen Mehrverbrauch an Druckgas und somit einen zusätzlichen energetischen Aufwand zum Bereitstellen des Druckgases mit dem Kompressor. Ein erhöhter Energieverbrauch bei der Herstellung ist somit die Folge.

Neben den Ventilen können jedoch auch weitere Komponenten der Blasstation zu einem Druckgasverlust führen. Es ist daher wünschenswert, den zusätzlichen Energieverbrauch gering zu halten oder sogar zu vermeiden und im Rahmen einer Wartung, insbesondere wenn ein zusätzlicher Druckgasverbrauch erkannt wird, der außerhalb eines tolerierbaren Bereichs liegt, auch fehlerhafte Komponenten zu identifizieren, die für den Druckverlust verantwortlich sind. Zur Wartung, Fehlererkennung und Identifikation der fehlerverursachenden Komponente ist es daher nötig, die Blasstation und damit die gesamte Blasmaschine außer Betrieb zu nehmen und die einzelnen Komponenten für die Prüfung zu entnehmen. Eine solche Wartung und Fehlersuche erfordert damit eine lange Stillstandzeit der Blasmaschine, die unerwünscht ist.

In der prioritätsbegründenden deutschen Patentanmeldung hat das Deutsche Patent- und Markenamt die folgenden Dokumente recherchiert: DE 10 2010 000 941 A1, EP 3 789 181 A1 und DE 10 2017 215 461 A1.

Aufgabe der vorliegenden Erfindung ist es daher, den Problemen des Standes der Technik zu begegnen. Insbesondere ist es Aufgabe der vorliegenden Erfindung die Stillstandzeiten einer Blasmaschine zum Auffinden von Fehlern, die zu einem erhöhten Druckgasverbrauch führen, zu verkürzen. Jedenfalls soll eine Alternative zum aus dem Stand der Technik Bekannten gefunden werden.

Hierzu betrifft die Erfindung ein Verfahren zum Erfassen einer Leckage eines Ventils einer Blasmaschine nach Anspruch 1.

Die Erfindung betrifft ein Verfahren zum Erfassen einer Leckage eines Ventils einer Blasmaschine mit mindestens einer Blasstation. Vorzugsweise umfasst die Blasmaschine mehrere Blasstationen.

Eine Blasstation dient zum Aufweiten eines Hohlkörpers gegen eine äußere Form durch Einleiten von Druckgas in den Hohlkörper. Demnach umfasst die Blasstation eine Blasdüse mit einer Blasdüsenöffnung zum Einleiten des Druckgases aus der Blasdüsenöffnung in den Hohlkörper. Beispielhaft entspricht das Druckgas Druckluft. Ferner umfasst die Blasstation einen Steuerblock mit mehreren Ventilen und eine Steuerung zum Steuern der Ventile. Die Blasdüse ist derart ausgebildet, dass der Hohlkörper dichtend zur Anlage an die Blasdüse gebracht werden kann. Durch die Ventile ist eine Zuführung des Druckgases steuerbar.

Der Steuerblock der Blasstation umfasst ein erstes Blasventil, ein zweites Blasventil und ein Entlüftungsventil. Jedes der genannten Ventile, nämlich des ersten Blasventils, des zweiten Blasventils und des Entlüftungsventils, weist jeweils einen Öffnungszustand, in dem das Ventil geöffnet ist, und einen Schließzustand, in dem das Ventil geschlossen ist, auf. Die Ventile entsprechen vorzugsweise 2/2-Wege-Ventilen. Jedes der genannten Ventile kann sich jeweils entweder im Öffnungszustand oder im Schließzustand befinden.

Das erste Blasventil umfasst ferner einen ersten Druckanschluss und das zweite Blasventil umfasst einen zweiten Druckanschluss. Das erste Blasventil ist eingerichtet, in seinem Öffnungszustand eine Fluidverbindung zwischen dem ersten Druckanschluss und der Blasdüsenöffnung bereitzustellen und in seinem Schließzustand zu unterbrechen. Das zweite Blasventil ist eingerichtet, in einem Öffnungszustand eine Fluidverbindung zwischen dem zweiten Druckanschluss und der Blasdüsenöffnung bereitzustellen und in seinem Schließzustand zu unterbrechen. Ferner umfasst das Entlüftungsventil einen Entlüftungsanschluss und ist eingerichtet, in seinem Öffnungszustand eine Fluidverbindung zwischen dem Entlüftungsanschluss und der Blasdüsenöffnung bereitzustellen und in einem Schließzustand zu unterbrechen.

Erfindungsgemäß umfasst das Verfahren zunächst das Bereitstellen von Druckgas mit einem ersten Druckniveau am ersten Druckanschluss. Das erste Druckniveau entspricht vorzugsweise einem Druck im Bereich von 5 bar bis 20 bar oder im Bereich von 5 bar bis 10 bar. Das erste Druckniveau dient demnach vorzugsweise während eines Produktionsbetriebsmodus der Blasmaschine zum Aufweiten eines Hohlkörpers in einer ersten Phase, nämlich zum Vorblasen und zum Erzeugen einer so genannten Flaschenblase aus dem Hohlkörper, der während einer Herstellung beispielsweise einem vorgewärmten Vorformling entspricht. Das zweite Druckniveau entspricht demgegenüber vorzugsweise einem Druck im Bereich von 20 bar bis 40 bar oder im Bereich von 10 bar bis 40 bar und dient vorzugsweise in einem Produktionsbetriebsmodus zum vollständigen Ausformen der Flaschenblase zu einem Behälter, vorzugswese in einer dritten Phase. Jedenfalls ist der Druck des Druckgases des zweiten Druckniveaus höher als der Druck des Druckgases gemäß dem ersten Druckniveau. Hier sei nur exemplarisch bezüglich der Druckniveaus auf den Produktionsbetriebsmodus verwiesen. Die erfindungsgemäßen Schritte werden in einem Testmodus ausgeführt, der sich von einem Produktionsbetriebsmodus unterscheidet.

Ferner wird gemäß der Erfindung ein Testkörper mit der Blasdüse abgedichtet verbunden. Erfindungsgemäß wird ein Testkörper verwendet, der ein konstant bleibendes Testvolumen bereitstellt. Vorzugsweise entspricht der Testkörper einem ungeheizten Vorformling oder einer Abdeckplatte, wie ein Blindstopfen, zum Abdecken der Blasdüse. Demnach entspricht das konstant bleibende Testvolumen einem Volumen im Öffnungsbereich der Blasdüse, wenn die Blasdüse mit einer Abdeckung abgedeckt wird oder im Fall eines nicht erwärmten Vorformlings dem Bereich in der Blasdüse zuzüglich des Innenraums des Vorformlings.

Konstant bleibendes Testvolumen wird vorliegend vorzugsweise als ein Volumen verstanden, dass insbesondere bei der Verwendung eines aus Kunststoff hergestellten Vorformlings gewissen Schwankungen unterliegen kann, die aber unterhalb eines vorbestimmten Grenzwerts liegen. So wird als konstantes Testvolumen ein Testvolumen verstanden, das auch unter Druckausübung, insbesondere mit dem zweiten Druckniveau, also beispielsweise mit einem Druck von bis zu 40 bar oder bis zu 50 bar eine maximale Änderung von weniger als 1%, weniger als 5 % oder weniger als 10 % erfährt. Ein Testvolumen, das beispielsweise in einem Bereich von +/- 5 % oder +/- 10 % um einen Ausgangswert variiert, soll als konstant verstanden werden. Vorzugsweise ist der Testkörper entsprechend starr ausgebildet, um ein solch konstant bleibendes Testvolumen bereitzustellen.

Das abgedichtete Verbinden des Testkörpers entspricht einem Verbinden des Testkörpers mit der Blasdüse derart, dass ein Fluidfluss zwischen einer die Blasdüse umgebenden Umgebung und der Blasdüsenöffnung verhindert ist. Bis zum Abschluss eines letzten Messschritts, der später beispielsweise als zweiter oder dritter Messschritt beschrieben wird, bleibt gemäß dem Verfahren der Testkörper mit der Blasdüse abgedichtet verbunden.

Ferner umfasst das Verfahren das Einstellen der Zustände der Ventile des Steuerblocks in einem Einstellschritt eines Testablaufplans mit der Steuerung. Das heißt, gemäß dem Einstellschritt wird festgelegt, ob das erste Blasventil in dem Öffnungszustand oder dem Schließzustand gehalten oder überführt wird, ob das zweite Blasventil in den Öffnungszustand oder in den Schließzustand gehalten oder überführt wird und das Entlüftungsventil in den Öffnungszustand oder den Schließzustand gehalten oder überführt wird. Auf den Einstellschritt folgt dann in einem Messschritt ein Messen mindestens eines Druckwerts oder eines Druckverlaufs. Der Druckwert oder der Druckverlauf wird in einem druckbeaufschlagbaren Wegbereich gemessen, der durch den Testkörper begrenzbar ist, der also vorzugsweise fluidleitend mit dem Testvolumen verbunden ist oder der Druckwert oder der Druckverlauf wird in einem Bereich, der dem Testvolumen entspricht, wie etwa im Bereich der Blasdüsenöffnung, gemessen. Der Messschritt folgt auf den Einstellschritt und ist ebenfalls Teil des Testablaufplans. Daraufhin werden der Druckwert und/oder der Druckverlauf während mindestens eines Messzeitraums erfasst und ausgewertet. Im Messschritt und insbesondere im Messzeitraum bleiben die Zustände der Ventile unverändert.

Vorzugsweise wird das Verfahren demnach in einem Testbetrieb ausgeführt, der sich von einem Produktionsbetrieb, bei dem ein Hohlkörper mit der Blasmaschine aufgeweitet wird, unterscheidet. Demnach umfasst das Verfahren vorzugsweise insbesondere vor dem Ausführen der Schritte des Testablaufplans das Umschalten von einem Produktionsbetriebsmodus in einen Testmodus.

Durch Bereitstellen eines Testablaufplans und das Verbinden eines Testkörpers mit einem konstant bleibenden Testvolumen können in Abhängigkeit von unterschiedlich eingestellten Zuständen der Ventile Druckveränderungen im Testvolumen erfasst und Änderungen des Druckwerts oder des Druckverlaufs innerhalb des Testvolumens als Leckage erkannt werden. Ändert sich demnach der Druckwert im Testvolumen, obwohl während des Messzeitraums die Zustände der Ventile unverändert bleiben, so kann darauf geschlossen werden, dass eines der Ventile eine Leckage aufweist. Ein fehlerhafter Steuerblock kann so von einem fehlerfreien Steuerblock unterschieden werden.

Hierbei liegt der Erfindung ferner die Erkenntnis zugrunde, dass besonders Druckgasverluste ihre Ursache häufig in Dichtungen der Ventile des Steuerblocks haben. Dennoch kann die Ursache für Druckgasverlust auch in Fehlern anderer Komponenten vorliegen. Da aber zunächst ein Fehler im Steuerblock vermutet wird, wird dieser üblicherweise demontiert. Aufgrund der hohen Anzahl der Anschlüsse des Steuerblocks ist jedoch ein Ausbau zur Wartung besonders zeitaufwendig. Das Verfahren ermöglicht somit einen Test des Steuerblocks ohne Ausbau des Steuerblocks, so dass bei der Fehlersuche ein fehlerhafter Steuerblock identifiziert oder ausgeschlossen werden kann. Stillstandzeiten einer Blasmaschine werden somit signifikant reduziert.

Gemäß einer ersten Ausführungsform umfasst das Verfahren als Einstellschritt einen ersten Einstellschritt des Testablaufplans, der vorzugsweise im Testmodus ausgeführt wird. Im ersten Einstellschritt des Testablaufplans werden alle Ventile in einen Schließzustand überführt oder im Schließzustand gehalten. Der Testkörper, wird vorzugsweise danach, mit der Blasdüse verbunden. Zusätzlich oder alternativ wird im ersten Einstellschritt dann, insbesondere nach dem Verbinden des Testkörpers mit der Blasdüse, für eine vordefinierte erste Öffnungsdauer das Entlüftungsventil in den Öffnungszustand überführt oder im Öffnungszustand gehalten. Daraufhin wird das Entlüftungsventil nach Ablauf der ersten Öffnungsdauer in einen Schließzustand überführt. In einem auf den ersten Einstellschritt folgenden ersten Messschritt wird dann mindestens ein Druckwert nach Ablauf einer vordefinierten ersten Messdauer oder für mindestens die vordefinierte erste Messdauer der Druckverlauf erfasst und ausgewertet.

Das Verfahren dient so, um bei der Auswertung nach dem ersten Einstellschritt und dem ersten Messschritt einen Defekt des ersten Blasventils und/oder des zweiten Blasventils zu erkennen und vorzugsweise auch dem Ventil zuordnen zu können. Durch kurzes Öffnen des Entlüftungsventils kann nämlich davon ausgegangen werden, dass im Testvolumen ein Umgebungsdruck herrscht. In Abhängigkeit vom gemessenen Druckwert nach Ablauf der ersten Messdauer oder dem Druckverlauf während der ersten Messdauer kann dann beispielsweise erkannt werden, ob grundsätzlich das erste oder zweite Blasventil defekt sind, wenn nämlich der gemessene Druck im Testvolumen steigt. Steigt der Druck auf das erste Druckniveau, kann von einem defekten ersten Blasventil ausgegangen werden. Steigt der Druck auf das zweite Druckniveau, kann von einem defekten zweiten Blasventil ausgegangen werden. Ist nur eine Steigerung des Drucks erkennbar, so kann möglicherweise noch das Entlüftungsventil defekt sein. Jedenfalls zeigt dieser erste Messschritt nach dem ersten Einstellschritt einen Fehler der Blasventile an, wenn der Druck im Testvolumen steigt.

Gemäß einer weiteren Ausführungsform umfasst der Testablaufplan einen zweiten Einstellschritt und einen zweiten Messschritt. Vorzugsweise folgt der zweite Einstellschritt auf den ersten Messschritt. Im zweiten Einstellschritt wird für eine vordefinierte zweite Öffnungsdauer das erste Blasventil oder das zweite Blasventil in den Öffnungszustand überführt oder im Öffnungszustand gehalten. Nach Ablauf der zweiten Öffnungsdauer wird dann das entsprechend geöffnete erste Blasventil oder zweite Blasventil wieder in den Schließzustand überführt. In einem zweiten Messschritt, der auf den zweiten Einstellschritt folgt, wird der Druckwert nach Ablauf einer vordefinierten zweiten Messdauer oder für mindestens eine vordefinierte zweite Messdauer erfasst und ausgewertet.

Anhand der Druckwerte oder des Druckverlaufs während der zweiten Messdauer kann eine genauere Untersuchung möglicher defekter Ventile erfolgen. Vorzugsweise wird das erste Blasventil während der zweiten Öffnungsdauer geöffnet und danach wieder in den Schließzustand überführt. Das Druckgas im Testvolumen weist dann im Wesentlichen den Druck auf, der dem ersten Druckniveau entspricht. Steigt dieser Druck im Testvolumen während der zweiten Messdauer, deutet dies auf einen Defekt im zweiten Blasventil hin. Fällt hingegen der Druck, deutet dies auf einen Fehler im Entlüftungsventil hin. In Kombination mit dem ersten Einstellschritt und dem ersten Messschritt lässt sich somit erkennen, ob die drei Ventile, nämlich das erste Blasventil, das zweite Blasventil oder das Entlüftungsventil, fehlerfrei sind und im Falle eines Fehlers lässt sich gleichzeitig identifizieren, welches dieser drei Ventile defekt ist. Wird nämlich, wie gemäß diesem Ausführungsbeispiel genauer beschrieben, im zweiten Messschritt erkannt, dass weder das zweite Blasventil noch das Entlüftungsventil defekt sind, und wurde im ersten Messschritt ein steigender Druck erkannt, so deutet dies auf einen Fehler im ersten Blasventil hin.

Gemäß einer weiteren Ausführungsform umfasst der Steuerblock zusätzlich ein Druckgasrückführungsventil. Das Druckgasrückführungsventil ist eingerichtet, in einem Öffnungszustand eine Fluidverbindung zwischen einem ersten Druckgasrückführungsanschluss und der Blasdüsenöffnung bereitzustellen und in einem Schließzustand zu unterbrechen. Außerdem umfasst das Verfahren das Bereitstellen von Druckgas mit einem dritten Druckniveau am Druckgasrückführungsanschluss. Das dritte Druckniveau unterscheidet sich vorzugsweise vom ersten Druckniveau und vom zweiten Druckniveau. Vorzugsweise ist das dritte Druckniveau höher als das erste Druckniveau und niedriger als das zweite Druckniveau. Durch Bereitstellen eines dritten Druckniveaus am Druckgasrückführungsanschluss kann ein weiteres Ventil, nämlich das Druckgasrückführungsventil, mit dem Verfahren ebenfalls getestet werden, wenn ein solches Druckgasrückführungsventil vorhanden ist.

Üblicherweise wird das Druckgasrückführungsventil auch als sogenanntes Airback-Ventil bezeichnet. Ein sogenanntes Airback-Ventil wird vorzugsweise mit einem Druckspeicher, der auch als Airback-Speicher bezeichnet werden kann, verwendet. Üblicherweise dient ein solches Ventil zum Rückführen von Druckgas mit dem zweiten Druckniveau aus einem fertig aufgeweiteten Behälter in den Airback-Speicher. Das Druckgas steht so für einen weiteren nachfolgenden Herstellungsprozess bereit. Ein solches Druckgasrückführungsventil ist demnach optional vorgesehen und dient zur Energieeinsparung. Vorzugsweise umfasst das Verfahren einen Messschritt, um auch das Druckgasrückführungsventil auf einen Fehler zu testen, so dass eine Zuordnung eines Fehlers zu einem der Ventile des Steuerblocks möglich ist.

Gemäß einer weiteren Ausführungsform erfolgt demnach das Bereitstellen von Druckgas mit einem dritten Druckniveau am Druckgasrückführungsanschluss nach Ablauf einer ersten Testphase in einer zweiten Testphase. Die erste Testphase umfasst vorzugsweise den ersten Einstellschritt, den ersten Messschritt, den zweiten Einstellschritt und den zweiten Messschritt. Während der ersten Testphase wird am Druckgasrückführungsanschluss somit ein Umgebungsdruck oder ein Druckniveau bereitgestellt, das zumindest geringer als das erste Druckniveau ist. Durch Bereitstellen eines Drucks des Druckgases am Druckgasrückführungsanschluss, der jedenfalls unterhalb des ersten Druckniveaus liegt, ist es möglich, dass zumindest ein erstes Blasventil oder zweites Blasventil eindeutig als Fehlerquelle identifizierbar sind, wenn ein Druck entweder auf das erste Druckniveau oder das zweite Druckniveau im zweiten Messschritt steigt.

Insbesondere wird die zweite Testphase nur ausgeführt, wenn in der ersten Testphase eine Leckage eines Ventils des Steuerblocks erkannt wird. Fällt nämlich im zweiten Messschritt der gemessene Druck ab, so kann noch nicht entschieden werden, ob der Druckabfall von einem defekten Entlüftungsventil oder von einem Druckgasrückführungsventil verursacht wird. Hierzu dient nun die zweite Testphase. Wird demgegenüber im ersten Messschritt sowie im zweiten Messschritt ein im Wesentlichen konstanter Druck gemessen, so kann, selbst wenn ein Druckgasrückführungsventil vorhanden ist, auch von einem fehlerfreien Druckgasrückführungsventil ausgegangen werden und die zweite Testphase muss nicht ausgeführt werden. Wird die erste Testphase demgegenüber abgeschlossen, ohne dass eine Druckveränderung während der Messzeiten erkannt wird, kann auch von einem fehlerfreien Druckgasrückführungsventil ausgegangen werden und der Testmodus kann beendet werden. Eine Optimierung der Testzeit wird somit erreicht.

Gemäß einer weiteren Ausführungsform umfasst der Testablaufplan einen dritten Messschritt, der in der zweiten Testphase ausgeführt wird. Vorzugsweise erfolgt der dritte Messschritt nach dem zweiten Messschritt. Der dritte Messschritt folgt hierbei unmittelbar auf den zweiten Messschritt. Unmittelbar bedeutet, dass zwischen dem zweiten Messschritt und dem dritten Messschritt keines der Ventile des Steuerblocks in einen Öffnungszustand überführt wird, also im Übergang vom zweiten Messschritt zum dritten Messschritt alle Ventile in einem Schließzustand gehalten werden. Im dritten Messschritt wird nach Ablauf einer vordefinierten dritten Messdauer mindestens ein Druckwert oder für mindestens eine vordefinierte dritte Messdauer der Druckverlauf erfasst und ausgewertet.

Vorzugsweise kann so erkannt werden, ob das Druckgasrückführungsventil defekt ist, wenn sich der Druck im dritten Messschritt ändert, insbesondere steigt. Dies ist der Fall, wenn vorzugsweise im zweiten Messschritt das erste Druckniveau durch Öffnen des ersten Blasventils für die erste Öffnungsdauer im Testvolumen eingestellt wurde, sodass während des zweiten Messschritts im Wesentlichen ein Druck mit dem ersten Druckniveau im Testvolumen bereitgehalten wurde. Steigt nämlich der Druck nun im dritten Messschritt, und konnte im zweiten Messschritt ein Defekt des zweiten Blasventils ausgeschlossen werden, da im zweiten Messschritt kein steigender Druck erkennbar war, kann nun von einem defekten Druckgasrückführungsventil ausgegangen werden, da das dritte Druckniveau nun in der zweiten Testphase höher als das erste Druckniveau anliegt. Fällt demgegenüber nun im dritten Messschritt der Druck oder steigt nicht an, ist von einem defekten Entlüftungsventil auszugehen. Hiervon ist insbesondere dann auszugehen, wenn im zweiten Messschritt der Druck im Testvolumen bereits gefallen ist, auch ohne dass Druck mit dem dritten Druckniveau am Druckgasrückführungsanschluss bereitgestellt wurde.

Gemäß einer weiteren, insbesondere zu den vorherigen beiden Ausführungsformen alternativen Ausführungsform, erfolgt das Bereitstellen von Druckgas mit einem dritten Druckniveau am ersten Druckgasrückführungsanschluss bereits vor dem ersten Einstellschritt. Gemäß dieser Ausführungsform umfasst das Verfahren eine erste Testphase, eine zweite Testphase und eine dritte Testphase. Die erste Testphase umfasst den ersten Einstellschritt und den ersten Messschritt, wie sie bereits genannt wurden. Die zweite Testphase wird ausgeführt, wenn in der ersten Testphase eine Leckage eines Ventils erkannt wurde, also eine Druckveränderung während des ersten Messschritts erkannt wurde. Die dritte Testphase wird ausgeführt, wenn keine Leckage in der ersten Testphase erkannt wird, während des ersten Messschritts der Druck im Testvolumen im Wesentlichen konstant war.

Während der zweiten Testphase wird in einem vierten Einstellschritt für eine vordefinierte vierte Öffnungsdauer das Entlüftungsventil in den Öffnungszustand überführt oder im Öffnungszustand gehalten. Nach Ablauf der vierten Öffnungsdauer wird das Entlüftungsventil wieder in den Schließzustand überführt. In einem auf den vierten Einstellschritt folgenden fünften Einstellschritt wird für eine vordefinierte fünfte Öffnungsdauer das erste Blasventil, das zweite Blasventil oder das Druckgasrückführungsventil in den Öffnungszustand überführt oder im Öffnungszustand gehalten. Nach Ablauf der zweiten Öffnungsdauer wird das entsprechend geöffnete Ventil wieder in den Schließzustand überführt. In einem auf den fünften Einstellschritt folgenden vierten Messschritt wird dann nach Ablauf einer vordefinierten vierten Messdauer mindestens ein Druckwert oder für mindestens eine vierte vordefinierte Messdauer der Druckverlauf erfasst und ausgewertet. Der vierte Einstellschritt und der fünfte Einstellschritt gefolgt von einem vierten Messschritt auf den fünften Einstellschritt werden wiederholt, wobei vorzugsweise das für die fünfte Öffnungsdauer geöffnete Ventil variiert wird. Eine alternative Ausführung kann somit ebenfalls zum Erkennen und Erfassen eines defekten Ventils ausgeführt werden.

Gemäß einer weiteren Ausführungsform umfasst die dritte Testphase den zweiten Einstellschritt und den zweiten Messschritt. Im zweiten Einstellschritt wird für eine vordefinierte zweite Öffnungsdauer das zweite Blasventil in den Öffnungszustand überführt oder im Öffnungszustand gehalten und nach Ablauf der zweiten Öffnungsdauer in einen Schließzustand überführt. Auch hier wird eine alternative Ausführung des Verfahrens aufgezeigt.

Gemäß einer weiteren Ausführungsform wird eine Leckage erkannt, indem nach einem oder jedem Messschritt jeweils der mindestens eine Druckwert oder der Druckverlauf mit einem erwarteten Druckwert bzw. einem erwarteten Druckverlauf verglichen wird. Der erwartete Druckwert oder der erwartete Druckverlauf ist demnach von dem dem Messschritt vorhergehenden Einstellschritt abhängig. Vorzugsweise ist vordefiniert, welche beim Vergleich erkannte Abweichung des gemessenen Druckwerts oder Druckverlaufs vom erwarteten Druckwert oder Druckverlauf indikativ für eine Leckage eines oder mehrerer möglicher Ventile ist. So kann vorzugsweise in einer Datenbank oder Tabelle, die vorzugsweise in der Steuerung hinterlegt ist und durch Berechnungen oder Versuche erzeugt wird, definiert sein, welcher Druckwert oder welcher Druckwert zuzüglich eines Toleranzbereichs in jedem der Messschritte erwartet wird. Tritt der Druck des Druckgases im Testvolumen in diesem Messschritt aus dem Toleranzbereich, kann von einem Fehler ausgegangen werden. Vorzugsweise ist in der Tabelle oder Datenbank auch definiert, welches Ventil des Steuerblocks ursächlich für die erkannte Art der Abweichung ist. Beispielsweise kann ein Ventil für einen nach oben aus dem Toleranzbereich abweichenden gemessenen Druck und ein Ventil für einen nach unten abweichenden Druck definiert sein. Automatisiert können so die Druckwerte während des Testablaufplans mit erwarteten Druckwerten verglichen werden, um so am Ende des Testablaufs automatisiert ein defektes Ventil, also ein Ventil mit einer Leckage, zu identifizieren oder anzugeben.

Gemäß einer weiteren Ausführungsform ist die Steuerung eingerichtet, eine Mitteilung für einen Benutzer der Blasmaschine auszugeben, wobei die Mitteilung ein Ventil des Steuerblocks einer Blasstation mit einer Leckage angibt oder identifiziert. Im Falle mehrerer Blasstationen umfasst die Mitteilung auch die Blasstation mit dem identifizierten Ventil.

Ein Starten des Testablaufplans im Testmodus auch bei kurzen Unterbrechungen des Betriebs durch Umschalten vom Produktionsbetriebsmodus in den Testmodus ist somit möglich, wobei nach Abschluss automatisch defekte identifizierte Ventile über eine Mitteilung angezeigt werden. Ein Servicemitarbeiter kann anhand dieser Mitteilung dann unmittelbar einen defekten Steuerblock oder ein einzelnes Ventil eines Steuerblocks instandsetzen oder erneuern oder entscheiden den Betrieb bis zu einer weiteren Unterbrechung vorerst fortzusetzen.

Gemäß einer weiteren Ausführungsform umfasst das Verfahren, dass mit der Steuerung eine Druckgasmengenmessung ausgeführt wird. Die Druckgasmengenmessung dient zum Messen der für das Bereitstellen des Druckgases benötigten Menge des Gases. Die Druckgasmengenmessung des Gases wird während der Einstellschritte und der Messschritte ausgeführt. Vorzugsweise kann so durch Messen der Menge ein Maß für eine Leckage erkannt werden. Vorzugsweise wird das Ergebnis der Druckgasmengenmessung mit der Mitteilung ausgegeben. Beispielsweise kann so entschieden werden, wenn der Testmodus oder Testablaufplan während einer kurzen Pause einer Betriebsunterbrechung ausgeführt wird, ob eine längere Unterbrechung zum Austausch des Ventils oder des Steuerblocks nötig ist oder ein normaler Betrieb noch für eine gewisse Dauer fortgesetzt werden kann.

Gemäß einer weiteren Ausführungsform umfasst die Erfindung eine Steuerung für eine Blasmaschine. Die Steuerung weist einen Produktionsbetriebsmodus auf, in dem die Steuerung die Blasmaschine steuert, um Hohlkörper umzuformen. Außerdem umfasst die Steuerung einen Testmodus, wobei die Steuerung im Testmodus eingerichtet ist, die Schritte des Verfahrens nach einem der vorhergehenden Ansprüche auszuführen.

Außerdem betrifft die Erfindung ein System mit einer Steuerung gemäß der vorgenannten Ausführungsform und mindestens einer Blasstation.

Gemäß einer Ausführungsform des Systems umfasst das System ferner einen Testkörper, wobei der Testkörper einen Verbindungsbereich aufweist. Der Verbindungsbereich ist eingerichtet, mit der Blasdüse derart abgedichtet verbunden zu werden, dass ein konstant bleibendes Testvolumen bereitgestellt wird. Das Testvolumen umfasst entweder ein Volumen in der Blasdüse, wenn der Testkörper als Blindflansch oder Deckel ausgebildet ist, sodass sich das Testvolumen innerhalb der Blasdüse ausbildet. Weist der Testkörper selbst ein Volumen auf, so entspricht das Testvolumen dem zuvor genannten Volumen im Bereich der Blasdüse zuzüglich des Volumens des Testkörpers. Ferner ist der Testkörper derart ausgebildet, dass das Volumen durch Beaufschlagen mit einem Druck der ersten Druckstufe, der zweiten Druckstufe oder der dritten Druckstufe konstant bleibt. Der Testkörper entspricht vorzugsweise einem untemperierten Vorformling oder untemperierten Hohlkörper.

Gemäß einer weiteren Ausführungsform umfasst das System eine Druckverteilungseinrichtung zum Bereitstellen von Druckgas mit zumindest dem ersten Druckniveau und dem zweiten Druckniveau aus mindestens einer Druckquelle. Die Druckquelle ist vorzugsweise ein Verdichter.

Weitere Ausführungsformen ergeben sich anhand der in den Figuren näher erläuterten Ausführungsbeispiele. Hierbei zeigen:
- Fig. 1: System gemäß einem Ausführungsbeispiel und
- Fig. 2: Schritte des Verfahrens.

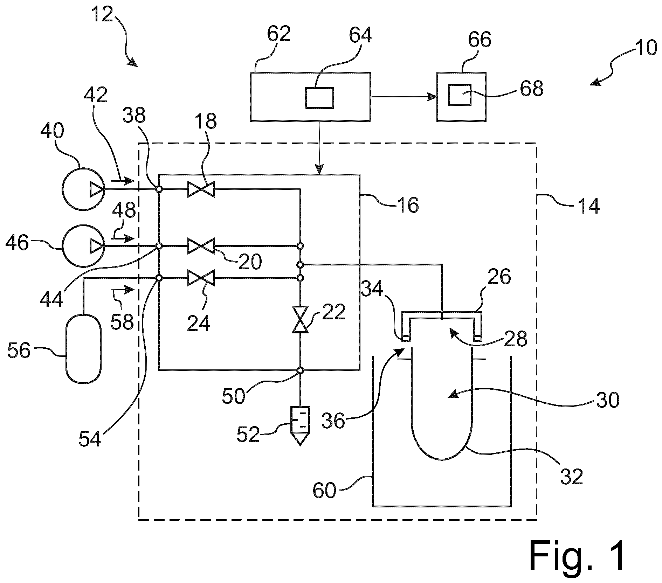

Fig. 1 zeigt ein System 10 gemäß der Erfindung. Das System 10 umfasst eine Blasmaschine 12 mit einer exemplarisch dargestellten einzelnen Blasstation 14. Die Erfindung umfasst auch Blasmaschinen 12 mit mehreren Blasstationen 14. Die Blasstation 14 umfasst einen Steuerblock 16. Der Steuerblock 16 umfasst ein erstes Blasventil 18, ein zweites Blasventil 20, ein Entlüftungsventil 22 sowie ein Druckgasrückführungsventil 24. Alle Ventile 18, 20, 22, 24 sind vorzugsweise 2/2-Wege-Ventile. Die Ventile 18, 20, 22, 24 sind jeweils mit einem ihrer Anschlüsse zusammengeführt und so mit einer Blasdüse 26 verbunden, um ein Druckgas an einer Blasdüsenöffnung 28 in ein Testvolumen 30 eines Testkörpers 32 auszugeben oder von dem Testvolumen 30 aufzunehmen. Die Blasdüse 26 weist ferner einen Dichtring 34 auf, um den Testkörper 32 in einem Verbindungsbereich 36 des Testkörpers dichtend mit der Blasdüse 26 zu verbinden.

Ferner weist der Steuerblock 16 einen ersten Druckanschluss 38 des ersten Blasventils 18 auf, der mit einem ersten Verdichter 40 verbindbar ist. Der erste Verdichter 40 ist eingerichtet, ein Druckgas mit einem ersten Druckniveau 42 bereitzustellen. Wird das erste Blasventil 18 geöffnet und sind die weiteren Ventile des Steuerblocks 16 geschlossen, so wird das Druckgas, das hier der Umgebungsluft entspricht, die vorzugsweise gefiltert und entfeuchtet ist, in das Testvolumen 30 abgeben. Bei geöffnetem ersten Blasventil 18 stellt sich demnach im Testvolumen 30 ein erstes Druckniveau 42 ein.

Ferner ist ein zweiter Druckanschluss 44 des zweiten Blasventils 20 am Steuerblock 16 vorgesehen, der das zweite Blasventil 20 mit einem zweiten Verdichter 46 verbindet. Der Verdichter 46 stellt ein Druckgas mit einem zweiten Druckniveau 48 bereit. Wird das zweite Blasventil 20 geöffnet und sind alle weiteren Ventile des Steuerblocks 16 geschlossen, so stellt sich im Testvolumen 30 das zweite Druckniveau 48 ein. Anstatt zweier Verdichter kann auch nur ein Verdichter und eine Druckverteilungseinrichtung vorgesehen sein, um die unterschiedlichen Druckniveaus bereitzustellen.

Ferner ist ein Entlüftungsanschluss 50 am Steuerblock 16 vorgesehen, um das Entlüftungsventil 22 mit einem Schalldämpfer 52 zu verbinden. Durch Öffnen des Entlüftungsventils 22 kann so ein Druckgas mit einem Druck, der oberhalb des Umgebungsdrucks liegt, und im Testvolumen 30 vorherrscht, über den Schalldämpfer 52 in die Umgebung abgelassen werden.

Außerdem weist der Steuerblock 16 einen Druckgasrückführungsanschluss 54 auf, um das Druckgasrückführungsventil 24 mit einem Druckspeicher 56 zu verbinden. Anstatt über das Entlüftungsventil 22 kann demnach auch ein Druckgas im Testvolumen 30 über das Druckgasrückführungsventil in den Druckspeicher 56 abgegeben und bei Bedarf wieder in das Testvolumen abgegeben werden. Ist der Druckspeicher 56 mit Druckgas gefüllt, kann über den Druckgasrückführungsanschluss 54 somit ein Druckgas mit einem dritten Druckniveau 58 bereitgestellt werden.

In Fig. 1 ist ferner eine Form 60 dargestellt, die für das erfindungsgemäße Verfahren in einem Testmodus lediglich die Funktion aufweist, den Testkörper zu halten und dichtend mit der Blasöffnung zu verbinden. Ferner umfasst die Blasmaschine 12 eine Steuerung 62, in der ein Testablaufplan 64 gespeichert ist, um in einem Testmodus die Ventile 18, 20, 22, 24 gemäß dem erfindungsgemäßen Verfahren anzusteuern. Mit der Steuerung 62 ist außerdem eine Anzeige 66 verbunden, mit der Mitteilungen 68 über den Status angezeigt werden können.

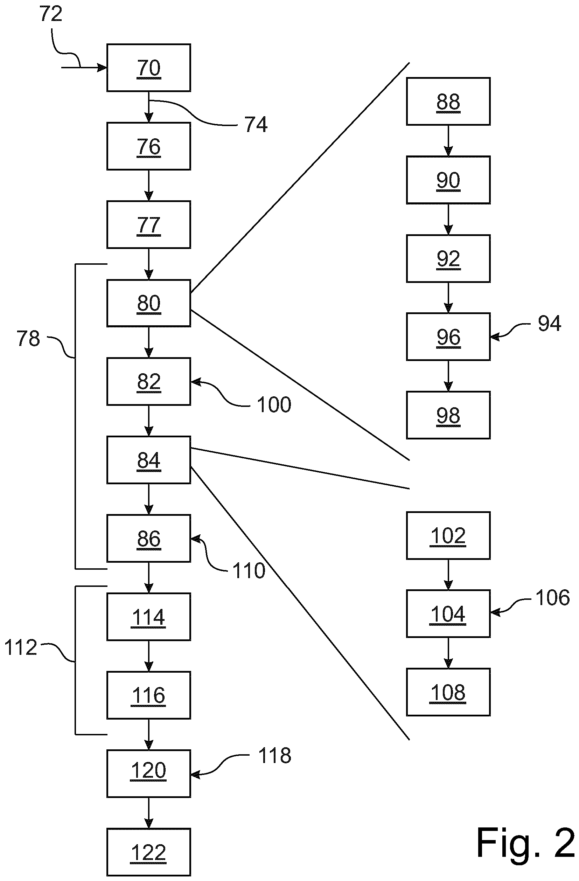

Fig. 2 zeigt die Schritte des Verfahrens gemäß einem Ausführungsbeispiel. In einem Schritt 70 wird von einem Produktionsbetriebsmodus 72 in einen Testbetrieb 74 mit der Steuerung 62 umgeschaltet. Im Schritt 76 wird ein Druckgas mit einem ersten Druckniveau am ersten Druckanschluss bereitgestellt und im Schritt 77 wird am zweiten Druckanschluss ein Druckgas mit einem zweiten Druckniveau bereitgestellt. Daraufhin folgt eine erste Testphase 78 mit einem ersten Einstellschritt 80, einem ersten Messschritt 82, einem zweiten Einstellschritt 84 und einem zweiten Messschritt 86. Im ersten Einstellschritt 80 werden alle Ventile 18, 20, 22, 24 eines Steuerblocks 16 einer Blasstation 14 in einen Schließzustand in einem Schritt 88 überführt. Daraufhin wird in einem Schritt 90 ein Testkörper 32 mit der Blasdüse 26 abdichtend verbunden. Nach dem Verbinden des Testkörpers 32 mit der Blasdüse 26 wird das Entlüftungsventil 22 in einem Schritt 92 in einen Öffnungszustand überführt. Daraufhin wird eine Öffnungsdauer 94 in einem Schritt 96 abgewartet und in einem Schritt 98 das Entlüftungsventil wieder geschlossen, also in einen Schließzustand überführt. Daraufhin wird im ersten Messschritt 82 ein Druckwert nach Ablauf einer vordefinierten ersten Messdauer 100 gemessen und ausgewertet.

Daraufhin folgt in dem zweiten Einstellschritt 84 ein Öffnen des ersten Blasventils im Schritt 102, wobei im Schritt 104 eine zweite Öffnungsdauer 106 abgewartet wird und nach Ablauf der zweiten Öffnungsdauer 106 im Schritt 108 das erste Blasventil 18 wieder geschlossen wird. In dem zweiten Messschritt 86 wird dann nach Ablauf einer vordefinierten zweiten Messdauer 110 erneut ein Messwert gemessen. Daraufhin folgt eine zweite Testphase 112, die einen Schritt 114 umfasst, in dem ein Druckgas mit einem dritten Druckniveau am Druckgasrückführungsanschluss 54 bereitgestellt wird. Die zweite Testphase 112 folgt nach dem zweiten Messschritt 86. Nach dem Bereitstellen des Druckgases mit dem dritten Druckniveau am Druckgasrückführungsanschluss im Schritt 114 wird dann in einem dritten Messschritt 116 nach Ablauf einer vordefinierten dritten Messdauer 118 ein Druckwert gemessen und ausgewertet. Im Schritt 120 wird wieder vom Testbetriebsmodus in den Produktionsbetriebsmodus geschaltet und im Schritt 122 wird eine Mitteilung 68 auf der Anzeige 66 über das Ergebnis des Tests ausgegeben.

### Bezugszeichen

- 10: System
- 12: Blasmaschine
- 14: Blasstation
- 16: Steuerblock
- 18: erstes Blasventil
- 20: zweites Blasventil
- 22: Entlüftungsventil
- 24: Druckgasrückführungsventil
- 26: Blasdüse
- 28: Blasdüsenöffnung
- 30: Testvolumen
- 32: Testkörpers
- 34: Dichtring
- 36: Verbindungsbereich
- 38: erster Druckanschluss
- 40: erster Verdichter
- 42: erstes Druckniveau
- 44: zweiter Druckanschluss
- 46: zweiter Verdichter
- 48: zweites Druckniveau
- 50: Entlüftungsanschluss
- 52: Schalldämpfer
- 54: Druckgasrückführungsanschluss
- 56: Druckspeicher
- 58: drittes Druckniveau
- 60: Form
- 62: Steuerung
- 64: Testablaufplan
- 66: Anzeige
- 68: Mitteilungen
- 70: Umschalten in Testbetrieb
- 72: Produktionsbetriebsmodus
- 74: Testbetrieb
- 76: Bereitstellen Druckgas am ersten Druckanschluss
- 77: Bereitstellen Druckgas am zweiten Druckanschluss
- 78: erste Testphase
- 80: erster Einstellschritt
- 82: erster Messschritt
- 84: zweiter Einstellschritt
- 86: zweiter Messschritt
- 88: Überführen Ventile in Schließzustand
- 90: Verbinden Testkörper mit Blasdüse
- 92: Überführen in Öffnungszustand
- 94: Öffnungsdauer
- 96: Abwarten Öffnungsdauer
- 98: Schließen Entlüftungsventil
- 100: Messdauer
- 102: Öffnen erstes Blasventil
- 104: Abwarten zweite Öffnungsdauer
- 106: zweite Öffnungsdauer
- 108: Schließen erstes Blasventil
- 110: zweite Messdauer
- 112: zweite Testphase
- 114: Bereitstellen Druckgas
- 116: dritter Messschritt
- 118: Messdauer
- 120: Umschalten Testbetriebsmodus in Produktionsbetriebsmodus
- 122: Ausgeben Mitteilung

## Patentansprüche

1. Verfahren zum Erfassen einer Leckage eines Ventils einer Blasmaschine (12), wobei die Blasmaschine (12) zum Aufweiten eines Hohlkörpers gegen eine äußere Form mindestens eine Blasstation (14) mit einem mehrere Ventile aufweisenden Steuerblock (16), eine Steuerung zum Steuern der Ventile und eine Blasdüse (26) aufweist, die gegen den in der äußeren Form gehaltenen Hohlkörper dichtend zur Anlage bringbar ist, wobei die Blasdüse (26) eine Blasdüsenöffnung (28) zum Einleiten von Druckgas in den Hohlkörper aufweist und eine Zuführung des Druckgases durch die Ventile steuerbar ist, wobei der Steuerblock (16) folgende Ventile umfasst:
- ein erstes Blasventil (18), das eingerichtet ist, in einem Öffnungszustand eine Fluidverbindung zwischen einem ersten Druckanschluss (38) und der Blasdüsenöffnung (28) bereitzustellen und in einem Schließzustand zu unterbrechen,
- ein zweites Blasventil (20), das eingerichtet ist, in einem Öffnungszustand eine Fluidverbindung zwischen einem zweiten Druckanschluss (44) und der Blasdüsenöffnung (28) bereitzustellen und in einem Schließzustand zu unterbrechen sowie
- ein Entlüftungsventil (22), das eingerichtet ist, in einem Öffnungszustand eine Fluidverbindung zwischen einem Entlüftungsanschluss (50) und der Blasdüsenöffnung (28) bereitzustellen und in einem Schließzustand zu unterbrechen, wobei das Verfahren umfasst:
- Bereitstellen von Druckgas mit einem ersten Druckniveau (42) am ersten Druckanschluss (38),
- Bereitstellen von Druckgas mit einem zweiten Druckniveau (48) am zweiten Druckanschluss (44), wobei das zweite Druckniveau (48) höher als das erste Druckniveau (42) ist,
- abgedichtetes Verbinden eines Testkörpers (32), der ein konstant bleibendes Testvolumen (30) bereitstellt oder mit dem ein konstant bleibendes Testvolumen (30) bereitgestellt wird, mit der Blasdüse (26) derart, dass ein Fluidfluss zwischen einer die Blasdüse (26) umgebenden Umgebung und der Blasdüsenöffnung (28) verhindert ist, wobei die Verbindung bis zum Abschluss eines letzten Messschritts bestehen bleibt,
- Einstellen der Zustände der Ventile des Steuerblocks (16) in einem Einstellschritt eines Testablaufplans mit der Steuerung,
- Messen mindestens eines Druckwerts oder eines Druckverlaufs in einem beaufschlagbaren Wegbereich, der durch den Testkörper (32) begrenzbar ist, vorzugsweise im Testvolumen (30) oder im Bereich der Blasdüsenöffnung (28), in einem Messschritt des Testablaufplans, der auf den Einstellschritt folgt,
- Erfassen und Auswerten des mindestens einen Druckwerts und/oder des Druckverlaufs während mindestens eines Messzeitraums des Messschritts, wobei im Messschritt die Zustände der Ventile unverändert bleiben.

2. Verfahren nach Anspruch 1, wobei in einem ersten Einstellschritt (80) des Testablaufplans (64) alle Ventile (18, 20, 22, 24) in einen Schließzustand überführt oder im Schließzustand gehalten werden und, vorzugsweise danach, der Testkörper (32) mit der Blasdüse (26) verbunden wird oder
im ersten Einstellschritt (80) nach dem Verbinden des Testkörpers (32) mit der Blasdüse (26) für eine vordefinierte erste Öffnungsdauer (94) das Entlüftungsventil (22) in den Öffnungszustand überführt oder im Öffnungszustand gehalten wird und nach Ablauf der ersten Öffnungsdauer (94) in einen Schließzustand überführt wird, wobei in einem auf den ersten Einstellschritt (80) folgenden ersten Messschritt (82) mindestens ein Druckwert nach Ablauf einer vordefinierten ersten Messdauer (100) oder für mindestens die vordefinierte erste Messdauer (100) der Druckverlauf erfasst und ausgewertet wird.

3. Verfahren nach Anspruch 1 oder 2, wobei der Testablaufplan (64) einen zweiten Einstellschritt (84) aufweist, der vorzugsweise nach dem ersten Messschritt (82) folgt, wobei im zweiten Einstellschritt (84) für eine vordefinierte zweite Öffnungsdauer (94) das erste Blasventil (18) oder das zweite Blasventil (20) in den Öffnungszustand überführt oder im Öffnungszustand gehalten wird, und nach Ablauf der zweiten Öffnungsdauer (106) in einen Schließzustand überführt wird, wobei in einem auf den zweiten Einstellschritt (84) folgenden zweiten Messschritt (86) mindestens ein Druckwert nach Ablauf einer vordefinierten zweiten Messdauer (110) oder für mindestens eine vordefinierte zweite Messdauer (110) der Druckverlauf erfasst und ausgewertet wird.

4. Verfahren nach einem der vorhergehenden Ansprüche, wobei der Steuerblock ferner umfasst:
ein Druckgasrückführungsventil (24), das eingerichtet ist, in einem Öffnungszustand eine Fluidverbindung zwischen einem ersten Druckgasrückführungsanschluss (54) und der Blasdüsenöffnung (28) bereitzustellen und in einem Schließzustand zu unterbrechen,
und das Verfahren ferner umfasst:
- Bereitstellen von Druckgas mit einem dritten Druckniveau (58) am ersten Druckgasrückführungsanschluss (54), wobei sich das dritte Druckniveau (58) vorzugsweise vom ersten Druckniveau (42) und vom zweiten Druckniveau (48) unterscheidet, derart, dass das dritte Druckniveau (58) höher als das erste Druckniveau (42) und niedriger als das zweite Druckniveau (48) ist.

5. Verfahren nach Anspruch 4, wobei das Bereitstellen von Druckgas mit einem dritten Druckniveau (58) am ersten Druckgasrückführungsanschluss (54) erst nach Ablauf einer ersten Testphase (78) in einer zweiten Testphase (112) ausgeführt wird, wobei
die zweite Testphase (112) nur ausgeführt wird, wenn in der ersten Testphase (78) eine Leckage eines Ventils des Steuerblocks (16) erkannt wird, und wobei
während der ersten Testphase (78) am Druckgasrückführungsanschluss (54) ein Umgebungsdruck oder ein Druck, der geringer als das erste Druckniveau (42) ist, anliegt, und wobei
die erste Testphase (78) vorzugsweise den ersten Einstellschritt (80), den ersten Messschritt (82), den zweiten Einstellschritt (84) und den zweiten Messschritt (86) umfasst.

6. Verfahren nach Anspruch 4 oder 5, wobei der Testablaufplan einen dritten Messschritt (116) in der zweiten Testphase (112) aufweist, der vorzugsweise nach dem zweiten Messschritt (86) der ersten Testphase (78) erfolgt, wobei
der dritte Messschritt (116) auf den zweiten Messschritt folgt (86), ohne dass dazwischen eines der Ventile (18, 20, 22, 24) in einen Öffnungszustand überführt wird, wobei
im dritten Messschritt (116) nach Ablauf einer vordefinierten dritten Messdauer (118) mindestens ein Druckwert oder für mindestens eine vordefinierte dritte Messdauer (118) der Druckverlauf erfasst und ausgewertet wird.

7. Verfahren nach Anspruch 4, wobei das Bereitstellen von Druckgas mit einem dritten Druckniveau am ersten Druckgasrückführungsanschluss (54) vor dem ersten Einstellschritt (80) ausgeführt wird und das Verfahren eine erste Testphase (78), eine zweite Testphase (112) und eine dritte Testphase umfasst, wobei
die erste Testphase (78) den ersten Einstellschritt (80) und den ersten Messschritt (82) umfasst, wobei eine zweite Testphase (112) ausgeführt wird, wenn in der ersten Testphase (78) eine Leckage eines Ventils erkannt und die dritte Testphase ausgeführt wird, wenn keine Leckage eines Ventils erkannt wird, wobei
während der zweiten Testphase (112) in einem vierten Einstellschritt für eine vordefinierte vierte Öffnungsdauer das Entlüftungsventil in den Öffnungszustand überführt oder im Öffnungszustand gehalten wird, nach Ablauf der vierten Öffnungsdauer in einen Schließzustand überführt wird und in einem auf den vierten Einstellschritt folgenden fünften Einstellschritt für eine vordefinierte fünfte Öffnungsdauer das erste Blasventil (18), das zweite Blasventil (20) oder das Druckgasrückführungsventil (24) in den Öffnungszustand überführt oder im Öffnungszustand gehalten wird und nach Ablauf der zweiten Öffnungsdauer in einen Schließzustand überführt wird, wobei
in einem auf den fünften Einstellschritt folgenden vierten Messschritt nach Ablauf einer vordefinierten vierten Messdauer mindestens ein Druckwert oder für mindestens eine vordefinierte vierte Messdauer der Druckverlauf erfasst und ausgewertet wird, wobei der vierte Einstellschritt und der fünfte Einstellschritt, gefolgt vom vierten Messschritt, wiederholt werden.

8. Verfahren nach Anspruch 7, wobei die dritte Testphase den zweiten Einstellschritt (84) und den zweiten Messschritt (86) umfasst, wobei im zweiten Einstellschritt (84) für eine vordefinierte zweite Öffnungsdauer das zweite Blasventil (20) in den Öffnungszustand überführt oder im Öffnungszustand gehalten wird und nach Ablauf der zweiten Öffnungsdauer in einen Schließzustand überführt wird.

9. Verfahren nach einem der vorhergehenden Ansprüche, wobei eine Leckage erkannt wird, indem nach einem oder jedem Messschritt (82, 86, 116) der mindestens eine Druckwert oder der Druckverlauf mit einem erwarteten Druckwert oder Druckverlauf verglichen wird, wobei der erwartete Druckwert oder Druckverlauf von dem dem Messschritt (82, 86, 116) vorhergehenden Einstellschritt (80, 84) abhängig ist, wobei vorzugsweise vordefiniert ist, welche Art einer beim Vergleich erkannten Abweichung für eine Leckage eines oder mehrerer möglicher Ventile indikativ ist.

10. Verfahren nach einem der vorhergehenden Ansprüche, wobei die Steuerung eingerichtet ist, eine Mitteilung für einen Benutzer der Blasmaschine (12) auszugeben, wobei die Mitteilung ein Ventil des Steuerblocks einer Blasstation (14) mit einer Leckage identifiziert, wobei im Fall mehrerer Blasstationen die Mitteilung auch die Blasstation mit dem identifizierten Ventil identifiziert.

11. Verfahren nach einem der vorhergehenden Ansprüche, wobei mit der Steuerung eine Druckgasmengenmessung zum Messen des für das Bereitstellen des Druckgases benötigten Gases während der Einstellschritte (80, 84) und der Messschritte (82, 86, 116), insbesondere im Testmodus, ausgeführt wird.

12. Steuerung für eine Blasmaschine (12), wobei die Steuerung einen Produktionsbetriebsmodus aufweist, in dem die Steuerung die Blasmaschine (12) steuert, Hohlkörper in Behälter umzuformen, und einen Testmodus aufweist, wobei die Steuerung im Testmodus eingerichtet ist, die Schritte des Verfahrens nach einem der vorhergehenden Ansprüche auszuführen.

13. System (10) mit einer Steuerung nach Anspruch 12 und mindestens einer Blasstation (14).

14. System (10) nach Anspruch 13, ferner umfassend einen Testkörper (32), wobei der Testkörper (32) einen Verbindungsbereich (36) aufweist, wobei der Verbindungsbereich (36) eingerichtet ist mit der Blasdüse (26) derart abgedichtet verbunden zu werden, dass ein Fluidfluss zwischen einer die Blasdüse (26) und den Testkörper (32) umgebende Umgebung und der fluidleitend mit dem Volumen verbundenen Blasdüsenöffnung (28) verhindert ist, wobei
der Testkörper (32) derart ausgebildet ist, dass das Volumen bei den Druckstufen konstant bleibt.

15. System (10) nach Anspruch 13 oder 14 mit einer Druckverteilungseinrichtung zum Bereitstellen von Druckgas mit zumindest dem ersten Druckniveau (42) und dem zweiten Druckniveau (48) aus einer Druckquelle, insbesondere einem Verdichter.
